# EUROPEAN PATENT APPLICATION

(11) **EP 4 742 636 A1**
(43) Date of publication of application: **13.05.2026**
(21) Application number: 25213884.7
(22) Date of filing: 06.11.2025
(51) Int. Cl.: H04L 67/52, H04L 67/12, B60K 35/10

(54) **METHOD AND APPARATUS FOR DISPLAYING IN-VEHICLE PAGE, DEVICE AND PRODUCT**

(30) Priority: 06.11.2024 CN 202411578219
(71) Applicant: Cariad (China) Co., Ltd., Beijing 100028 (CN)
(72) Inventor: LI, Fan, Beijing, 100028 (CN); YUAN, Xiaoyu, Beijing, 100028 (CN); MIAO, Yueqin, Beijing, 100028 (CN)
(74) Representative: Müller-Boré & Partner Patentanwälte PartG mbB

(57) **Abstract**

The present disclosure relates to a method and an apparatus for generating an in-vehicle page, a device, and a product. The method (300A) includes transmitting (302A) input information from a user and a status of a vehicle to a cloud server. The method (300A) further includes receiving (304A) an in-vehicle page from the cloud server, where the in-vehicle page is generated by a generative model in the cloud server based on the input information and the status of the vehicle. The method (300A) also includes displaying (306A) the in-vehicle page based on the received in-vehicle page. In this way, a diverse and personalized in-vehicle page can be generated by a generative model based on a user need and a status of a vehicle, thereby improving the user's in-vehicle entertainment and travel experience.

## Description

### FIELD

The present disclosure generally relates to the technical field of vehicles, and more specifically, to a method and an apparatus for displaying an in-vehicle page, a device and a product.

### BACKGROUND

The development of vehicle technology is accompanied with emergence of more intelligent vehicles, for example, more entertaining, practical, and diverse in-vehicle interactive systems, and more functionally-diversified in-vehicle entertainment systems. Wherein, the in-vehicle entertainment systems are designed to provide users with a more convenient, richer and more personalized travel experience. In the circumstance, the users are further expecting more diverse and more intelligent functions of the in-vehicle entertainment systems. For example, the users desire to enjoy services similar to, or even better than, those provided by the smartphones or home entertainment systems.

### SUMMARY

The embodiments of the present disclosure provide a method and an apparatus for displaying an in-vehicle image, a device, and a product.

In a first aspect of the present disclosure, there is provided a method for displaying an in-vehicle image. The method includes transmitting input information from a user and a status of a vehicle to a cloud server. The method further includes receiving an in-vehicle page from the cloud server, the in-vehicle page being generated by a generative model in the cloud server based on the input information and the status of the vehicle. In addition, the method includes displaying the in-vehicle page based on the received in-vehicle page.

In a second aspect of the present disclosure, there is provided a method for generating an in-vehicle page. The method includes receiving input information from a user and a status of a vehicle. The method also includes generating, by a generative model, a corresponding in-vehicle page based on the input information and the status of the vehicle. Further, the method includes transmitting the in-vehicle page to the vehicle.

In a third aspect of the present disclosure, there is provided an apparatus for displaying an in-vehicle page. The apparatus includes: a transmitting module configured to transmit input information from a user and a status of a vehicle to a cloud server. The apparatus further includes a receiving module configured to receive an in-vehicle page from the cloud server, the in-vehicle page generated by a generative model in the cloud server based on the input information and the status of the vehicle. Moreover, the apparatus includes a display module configured to display the in-vehicle page based on the received in-vehicle page.

In a fourth aspect of the present disclosure, there is provided an electronic device. The electronic device includes: one or more processors; and a memory for storing one or more programs, where the one or more programs, when executed by the one or more processors, cause the one or more processors to perform the method provided in the first aspect of the present disclosure.

In a fifth aspect of the present disclosure, there is provided a computer readable storage medium. The computer readable storage medium has computer executable instructions stored thereon, where the computer executable instructions are executed by a processor to implement the method provided in the first aspect of the present disclosure.

In a sixth aspect of the present disclosure, there is provided a computer program product tangibly stored on a computer readable medium and comprising machine executable instructions that, when executed, implement the method provided in the first aspect of the present disclosure.

It would be appreciated that this Summary is not intended to identify key features or essential features of the embodiments of the present disclosure, nor is it intended to be used to limit the scope of the present disclosure. Other features of the present disclosure will become evident through the following description.

### BRIEF DESCRIPTION OF THE DRAWINGS

Through the following detailed description with reference to the accompanying drawings, the above and other objectives, features, and advantages of example embodiments of the present disclosure will become more apparent. In the drawings, the same or similar reference symbols refer to the same or similar elements, where:
Fig. 1 illustrates a schematic diagram of an example environment where a plurality of embodiments of the present disclosure can be implemented;
Fig. 2 illustrates a schematic diagram of generating an in-vehicle page according to some embodiments of the present disclosure;
Fig. 3A illustrates a flowchart of a method for displaying an in-vehicle page according to some embodiments of the present disclosure;
Fig. 3B illustrates a flowchart of a method for generating an in-vehicle page according to some embodiments of the present disclosure;
Fig. 4 illustrates a schematic diagram of generating an in-vehicle page based on a preset layout according to some embodiments of the present disclosure;
Fig. 5 illustrates a schematic diagram of adjusting an in-vehicle page according to some embodiments of the present disclosure;
Fig. 6 illustrates a block diagram of an apparatus for generating an in-vehicle page according to some embodiments of the present disclosure;
Fig. 7 illustrates a block diagram of an apparatus for displaying an in-vehicle page according to some embodiments of the present disclosure; and
Fig. 8 illustrates a block diagram of a device that can implement some embodiments of the present disclosure.

### DETAILED DESCRIPTION OF EMBODIMENTS

Reference below will be made to the drawings to describe in detail the embodiments of the present disclosure. Although some embodiments disclosed herein are depicted in the drawings, it would be appreciated that the present disclosure can be implemented in various manners and should not be construed as being limited to the embodiments described herein. Rather, those embodiments are provided merely to describe the present disclosure thoroughly and completely. It would be appreciated that the drawings and embodiments of the present disclosure are provided only as examples and are not intended for limiting the scope disclosed herein in any manner.

As used herein, the term "includes" and similar expressions are to be read as open-ended terms that mean "includes, but is not limited to." The term "based on" is to be read as "based at least in part on." The term "an embodiment" or "the embodiment" is to be read as "at least one example embodiment." The term "first," "second" or the like can represent different or the same objects. Other definitions, either explicit or implicit, may be included below.

As described above, an in-vehicle entertainment system may contain various applications (e.g., application software, web applications, or the like), some of which are generally fixed. In the process of development, developers typically predefine or envision some usage scenarios, and develop various applications accordingly. However, the developers can barely cover all the user needs into consideration at the development phase, such that the applications included in the in-vehicle entertainment systems cannot truly satisfy the users' personalized needs. For example, it is difficult for users to find, in the in-vehicle entertainment systems, applications or pages that meet their needs in terms of appearance, layout, and functionality.

To this end, the embodiments of the present disclosure provide a method for generating an in-vehicle page. The method includes receiving input information from a user and a status of a vehicle. The method further includes generating, by a generative model, a corresponding in-vehicle page based on the input information and the status of the vehicle. In addition, the method includes transmitting the in-vehicle page to the vehicle, and displaying, by the vehicle, the in-vehicle page.

In this way, diverse and personalized in-vehicle pages or applications can be generated by a generative model based on a status of the vehicle and user needs, which can significantly improve the users' travel experience. Due to the zero-code programming capability of the generative model, professional skills are no longer a necessity for users to create applications that can meet their needs. In addition, in the process of generating an in-vehicle page, the generative model can make full use of the computing capability and stored resources of the cloud to provide users with smoother and more efficient services.

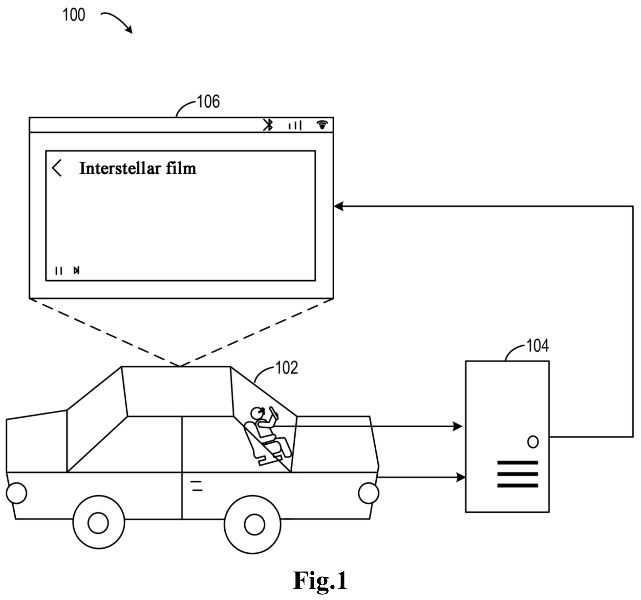

Fig. 1 illustrates a schematic diagram of an example environment 100 where a plurality of embodiments of the present disclosure can be implemented therein. As shown therein, the environment 100 includes a vehicle 102, and a cloud server 104 in communication with the vehicle 102. Wherein, the vehicle 102 refers to any type of movable motorized or non-motorized vehicles that can carry people and/or objects. The vehicle 102 may include various types of vehicles, which may include, but is not limited to, a car, a truck, a bus, a boat, a plane, a train, and the like, which is not specifically limited herein. The cloud server 104 can be implemented as a service terminal with a computing capability. The service terminal may be a server, a large computing device, or the like, provided by various service providers.

According to the embodiments of the present disclosure, the vehicle 102 can be provided with various types of sensors for collecting data in multiple modalities. Wherein, the sensors may include visual sensors (also referred to as optical or video cameras), sound sensors, Global Positioning Systems (GPSs), and the like. Wherein, the visual sensor is used to capture a plurality of images of surroundings of the vehicle 102. The global positioning system can be used to estimate a geographical position of the vehicle 102. The sound sensor can be used to collect audio data within the vehicle cabin and audio data of surroundings of the vehicle 102. In some embodiments of the present disclosure, data collected by various sensors may include information, such as a traveling route, a speed, an acceleration, and like, of the vehicle 102 during traveling, as well as information on a status of a vehicle control unit, and the like. Based on the data collected by the sensors, the status of the vehicle 102 and safety restriction information can be determined.

In some embodiments, the status of the vehicle may be a status in multiple dimensions, for example, an operating status (e.g., a traveling speed, an acceleration, a braking system status, a lighting system status, and a steering system status of the vehicle), an environment status (e.g., an object included in the environment, and weather), a health status (e.g., a battery status, a tire status, and a fuel tank status), and a display screen status (e.g., a screen resolution of a display, a displayable area, a position, and the like).

In some embodiments of the present disclosure, the vehicle 102 may include an in-vehicle display 106, where the in-vehicle display 106 may be a display screen arranged in the vehicle 102 for visually displaying to a user inside the vehicle information such as an in-vehicle page, electronic navigation, a video image, a game image, or the like. In some embodiments, the in-vehicle display 106 includes, but is not limited to, a central control display arranged in the middle of the vehicle dashboard, a front-passenger-seat display arranged in front of the front passenger seat, and rear-seat displays arranged in the rear seats, and the like. The respective candidate in-vehicle displays are connected to the controller of the vehicle.

In some embodiments of the present disclosure, a user can input his/her need in multiple interaction manners. For example, the user can input his/her need via a speech module of the vehicle 102. In some embodiments, the status of the vehicle can be used to characterize a condition or performance of the vehicle in different dimensions. For example, the status of the vehicle may include, but is not limited to, an operating status, an environment status, a health status, a vehicle control unit status, a display status, and the like.

Referring to Fig. 1, the status of the vehicle and the input information from the user can be sent to the cloud server 104, and the cloud server 104 then can generate a corresponding in-vehicle page. In some embodiments of the present disclosure, the cloud server 104 may have a generative model deployed therein. The generative model can generate an in-vehicle page based on the input information from the user and the status of the vehicle. For example, a video player for playing an interstellar-themed film based on the user need and the status of the vehicle. In some embodiments of the present disclosure, the cloud server 104 can transmit the in-vehicle page generated by the generative model to the vehicle 102. The vehicle 102 can display the in-vehicle page to the user using the in-vehicle display 16. It would be appreciated that the vehicle 102 can load the in-vehicle page via a browser, and display the loading process on the in-vehicle display 106.

In this way, based on the status of the vehicle and the user needs, a diverse and personalized in-vehicle page or application can be generated using the generative model, which can significantly improve the user's driving experience. Due to the zero-code programming capacity of the generative model, professional skills are no longer a necessity for users to create applications that can meet their needs. In addition, in the process of generating an in-vehicle page, the generative model can make full use of the computing capability and stored resources of the cloud to provide users with smoother and more efficient services.

Reference above has been made to Fig. 1 that illustrates a schematic diagram of an example environment 100 where embodiments of the present disclosure can be implemented. It would be appreciated that the environment 100 is provided only illustratively, rather than implying any limitation to the scope of the present disclosure. The environment 100 may include more components not shown in Fig. 1, and the respective components in the environment 100 can be implemented in different manners.

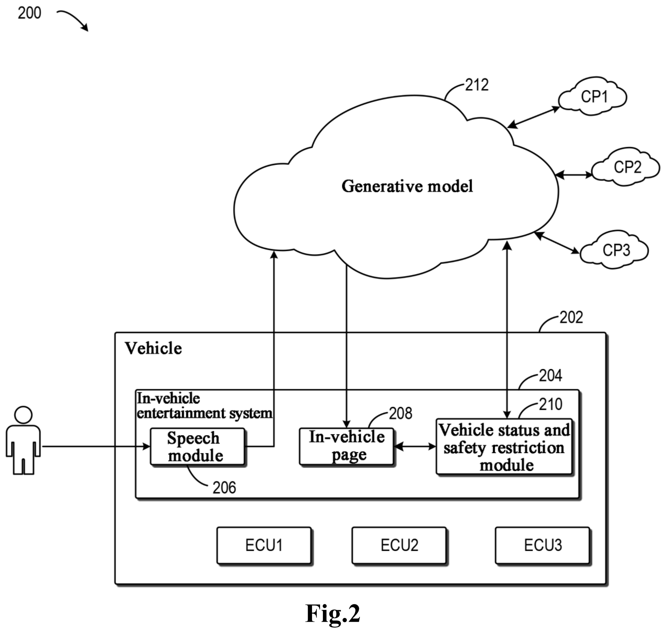

Reference below will be made to Fig. 2 that illustrates a schematic diagram of generating an in-vehicle page according to embodiments of the present disclosure. As shown therein, a user can input his/her need via a speech module 206 or other module of a vehicle 202 (e.g., a touch screen module of the vehicle 102). For example, "I want to watch a film comfortably in my car. Please recommend recent popular Chinese and foreign films" can be input in a speech manner. Upon receiving speech data, the vehicle 102 can transmit the speech data to a cloud server 212 in communication with the vehicle. The cloud server 212 may have a generative model deployed therein. The number of the generative models may be one or more. It would be appreciated that different generative models can implement different tasks. For example, the generative model may be a language model that can figure out the user's intent based on audio data input by the user. The generative model may also be a large language model or a multimodal generative model configured to generate corresponding code and a corresponding configuration file according to generation requirements. For example, the large language model can generate corresponding application code and a corresponding configuration file, or generate a corresponding page (e.g., an application in the form of web), based on a user input.

Referring to Fig. 2, the generative model can have links to various ecological contents, for example, resources provided by Content Providers (CPs) (e.g., a resource provided by a CP1, a resource provided by a CP2, and a resource provided by a CP3), and a knowledge base. Wherein, the content provider may be a supplier of service resources that may be various media resources such as text, images, audio, videos, and the like. For instance, the content provider can provide Chinese and foreign films, and the like.

In some embodiments of the present disclosure, when determining the user's intent based on the user input information, the generative model can request for a status of the vehicle at the current moment and latest configuration rules, to allow the generative model to perform functional convergence when generating a page or application. The status of the vehicle 202 may be a traveling status, a health status, a controllable vehicle function, and the like, of the vehicle 202. The vehicle 202 can encapsulate the vehicle function into an Application Programming Interface (API). When generating a page or application, the generative model can access a corresponding API to generate an instruction for controlling the vehicle 202.

Referring to Fig. 2, a vehicle status and safety restriction module 210 can monitor in real time a traveling status and a health status of the vehicle 202 at a current moment, availability, a preset style standard and a preset visual framework (e.g., a screen resolution, a displayable area, a position, and the like) of each vehicle component, and usage restriction conditions for various applications (e.g., video applications are prohibited from being displayed during traveling). The vehicle status and safety restriction module 210 can transmit the monitored vehicle status and safety restriction information to the generative model, to provide a reference condition and basis for the generative model to generate a page or application.

In some embodiments of the present disclosure, the generative model can generate a corresponding application by comprehensively considering the user's intent, the vehicle status and safety restriction information, the preset style standard, and the preset visual framework. The application may be in the form of web, or may be an Android application, Apple application, or the like, at the vehicle end. Depending the above factors, the generative model can select a corresponding ecological content from the linked ecological contents, and then generate a corresponding application or page based on the ecological content.

As shown in Fig. 2, after generating the application or page, the generative model can transmit the application or page to the vehicle 202, and the vehicle 202 can load a corresponding in-vehicle page 208, application software, or the like, via a browser. It would be appreciated that, in order to make the in-vehicle page 208 more in line with the user's preference, the user can be given a permission to adjust the page, such that the user can input his/her adjustment need (e.g., changing font, adding a function, or the like) via a speech module 206 according to his/her preference. Upon receiving the input information from the user, the generative model can determine the user's adjustment intent, and adjust the generated application depending on the adjustment intent, to make the in-vehicle page 208 more tailored to the user's preference.

It would be appreciated that, due to some restrictions on certain application or pages during traveling, the vehicle status and safety restriction module 210 needs to determine, in the process of running the in-vehicle page 208, whether there is a safety risk during the running period. If there is a safety risk, it is required to stop running the in-vehicle page 208 and return abnormality alert information. For example, the user can be alerted to an abnormality through sound, text, or the like.

In this way, depending on the semantic understanding and the zero-code programming capability of the generative model, a personalized in-vehicle page can be generated dynamically according to the user need. In addition, in the processing of running an in-vehicle page, safety risk can be monitored in real time, thereby improving the users' satisfaction with the personalized needs while ensuring the safety and controllability of the in-vehicle page.

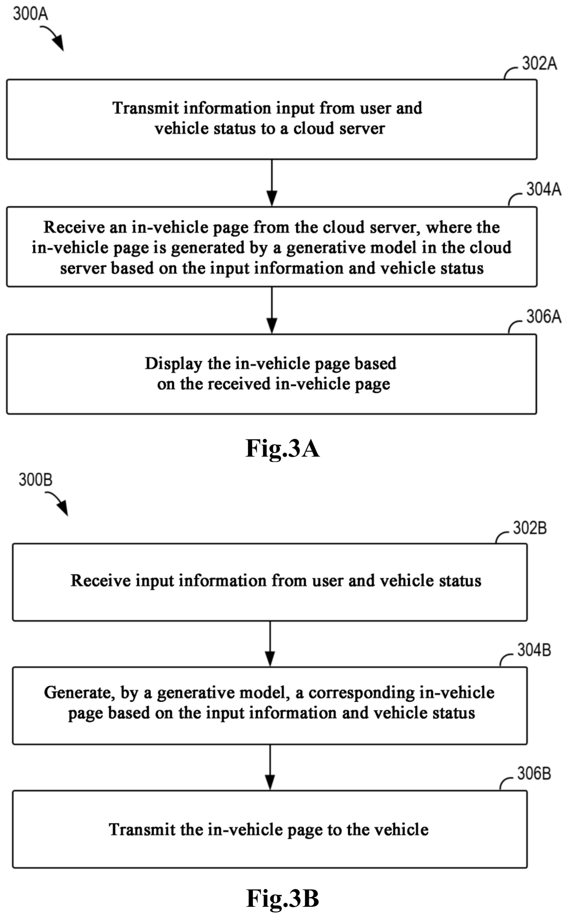

Fig. 3A is a flowchart of a method 300A for displaying a page according to some embodiments of the present disclosure. The method 300A can be performed by the vehicle 102 as shown in Fig. 1.

As shown therein, in block 302A, the method 300A may include transmitting input information from a user and a status of the vehicle to a cloud server (e.g., the cloud server 104 shown in Fig. 1). The user (e.g., a vehicle user) can input his/her need through a user terminal in communication with the vehicle (e.g., the vehicle 102 in Fig. 1), or the vehicle. By way of example, the user can input his/her need in multiple manners (e.g., speech input, text input, touch input, biometric input, gesture input, or the like). In an example, the user can input information through speech input using a speech model of the vehicle. For instance, the information input by the user may be "I want to watch an interstellar-themed film," "I want to listen to songs of the singer XX," "Remind me to pick up my child at four o'clock," or the like. It would be appreciated that the input information from the user can characterize his/her need to some extent.

In some embodiments of the present disclosure, the status of the vehicle can characterize a condition or performance of the vehicle in different dimensions. For example, the status of the vehicle may include, but is not limited to, an operating status, an environment status, a health status, a vehicle control unit status, a display screen status, and the like. Wherein, the operating status may include vehicle traveling parameters (e.g., a traveling speed, an acceleration, a steering angle, and the like), a braking system status (e.g., wear condition of a brake pad, travel of a brake pedal, and the like), and a steering system status (e.g., a steering angle, steering assist, and the like). The environment status of the vehicle may refer to environment information on an environment where the vehicle is located, for example, information on objects (e.g., pedestrians, buildings, lane lines, obstacles, and the like) in surroundings, and behavior information of those objects (e.g., moving, stationary, and the like). In other embodiments, the environment status of the vehicle may further include weather (e.g., sunny, rainy, cloudy, or the like) and season (e.g., spring, summer, autumn, or winter) for a current location of the vehicle, a current time period (e.g., morning, afternoon, evening, or the like), and the like.

In some embodiments of the present disclosure, the health status of the vehicle may include a battery level, a fuel level, a charging speed, a tire pressure, or the like. The vehicle control unit can be used to manage and coordinate various electronic systems and functions of the vehicle, and the status of the vehicle control unit may include whether the air conditioner is on, ON parameters (fan speed, temperature, air swing, and the like), whether a window is open, whether ambient lighting is on, ON parameters thereof (color, flashing or not, and the like). In some embodiments, the display screen status of the vehicle may include a resolution of the display screen, a displayable area, a display position, and the like.

In block 304A, the method 300A includes receiving an in-vehicle page from the cloud server, where the in-vehicle page is generated by a generative model in the cloud server based on the input information and the status of the vehicle. In some embodiments of the present disclosure, the generative model (e.g., the generative model deployed in the cloud server 104 in Fig. 1, or the generative model in Fig. 2) is a machine learning model or a deep learning model for generating a page, which can be trained with data. In some embodiments, the generative pre-trained model can be fine-tuned such that the generative pre-trained model can perform various processing tasks, such as page generation, text generation, and the like.

It would be appreciated that the generative model can be link to and integrate content from various ecological sources, such as a database, an API, resources of a content provider, and a service of a third party. Wherein, an API interface may be a predefined function that allows a third-party program to call data or provide a data-based service through a network. In some embodiments, the generative model can generate application (or page) code and a configuration file based on the input information from the user and the status of the vehicle in conjunction with the linked ecological content. It would be appreciated that the application may be common application software, or may be an application in the form of a page (e.g., Web APP), and a user can directly access the application through a browser at the vehicle end and be provided with a function and an interface similar to those of a local APP. For example, the user can access the in-vehicle page by entering an application address through a browser, scanning QR code, or the like.

In some embodiments, the generative model can understand a user's generation intent based on input information from the user. Considering the user's generation intent, the generative model can generate a corresponding in-vehicle page (i.e., a dynamic navigation interface, a personalized entertainment playlist, a personalized alarm clock, or the like) based on the linked ecological content. In the process of generating the in-vehicle page, reference can be made to the status of the vehicle. For example, a layout of the in-vehicle page can be adjusted with reference to the display screen status of the vehicle, or an element of the in-vehicle page can be adjusted based on the environment status of the vehicle. For example, if the vehicle is in a scene of a city, an element of "modern buildings" can be added to the generated in-vehicle page.

In block 306A, the method 300A may include displaying the in-vehicle page based on the received in-vehicle page. For example, the vehicle (e.g., the vehicle 202 in Fig. 2) can load the in-vehicle page, and display the in-vehicle page using the in-vehicle display screen. It would be appreciated that the in-vehicle page is interactive, allowing a user to interact therewith via a touchscreen, speech control, or the like.

In this way, diverse and personalized in-vehicle pages or applications can be generated by a generative model based on a status of a vehicle and user needs, which can significantly improve the users' driving experience. Due to the zero-code programming capability of the generative model, professional skills are no longer a necessity for users to create applications that can meet their needs. In addition, in the process of generating an in-vehicle page, the generative model can make full use of the computing capability and stored resources of the cloud to provide users with smoother and more efficient services.

Fig. 3B illustrates a flowchart of a method 300B for generating a page according to some embodiments of the present disclosure. The method 300B can be performed by the cloud server 104 shown in Fig. 1. As shown therein, in block 302B, the method 300B may include receiving input information from a user and a status of a vehicle. For example, the input information and the status of the vehicle can be received via a communication link between the cloud server (e.g., the cloud server 104) and the vehicle (e.g., the vehicle 102), where the communication link may be wired, or may be wireless.

In block 304B, the method 300B may include generating, by a generative model, a corresponding in-vehicle page based on input information from a user and a status of the vehicle. It would be appreciated that the cloud server may have a generative model deployed therein. The generative model can generate a corresponding in-vehicle page, and reference could be made to the generation method according to the embodiments described above for a specific generation method, which will not be detailed herein.

In block 306B, the method 300B may include transmitting the in-vehicle page to the vehicle. For example, the in-vehicle page can be received via the communication link between the cloud server and the vehicle. It would be appreciated that the running of the in-vehicle page is executed by the cloud server, and stored resources and computing resources required for running are allocated by the cloud server.

In this way, the task of generating and processing an in-vehicle page can be offloaded to a cloud server, thereby greatly reducing the load on the interior system of the vehicle while improving the scalability and flexibility of the system. Moreover, the structure causes in-vehicle pages to be more diversified, making them more line with users' preferences and thus providing users with a richer and more personalized experience.

In some embodiments of the present disclosure, in order to provide users with an immersive entertainment experience, when generating an in-vehicle page, the generative model can also call other functions of the vehicle to complement the display of the in-vehicle page. For example, in a case of generating a media playback page, a user can be provided with more comfortable and more tailed driving or riding experience by adjusting the seat, air conditioning temperature, or the like. On the basis, all the control functions of the vehicle can be determined based on the status of the vehicle, and then can be encapsulated as API interfaces to be called by the generative model. Wherein, the functions of the vehicle may include functions of in-vehicle components currently available to the vehicle. For example, the generative model can generate a corresponding control instruction based on an actual controllable function of the vehicle.

In some embodiments of the present disclosure, a vehicle component coupled with the in-vehicle page can be determined based on the current status of the vehicle, where the component coupled with the in-vehicle page may be a component associated with the in-vehicle page, which can assist the in-vehicle page in providing the user with a more immersive experience. For example, if the in-vehicle page is a page of "Play Music", the vehicle components coupled with the in-vehicle page may include "air conditioner, ambient lighting, fragrance system, lighting system," and the like. For instance, in a case of playing dynamic music, a user can be given an immersive entertainment experience with the aid of flashing of the ambient lighting and fragrance from the fragrance system. After determining the corresponding vehicle component, a list currently available to the vehicle can be generated based on the configuration file of the in-vehicle component, and then synchronized to the generative model in the cloud. Following generating the in-vehicle page, the generative model can generate an instruction for controlling a vehicle component by calling an API, so as to control the corresponding vehicle component during the startup or use of the in-vehicle page.

In some embodiments of the present disclosure, a preset layout manner can be generated based on the status of the vehicle and the input information from the user, where the preset layout manner may include, but is not limited to, elements such as an overall page structure, color scheme, font style, icon design, and the like. Different display screens of vehicles may be varied in size, resolution, and display mode (e.g., landscape or portrait). In the circumstance, based on the actual status of the display screen, a preset layout manner matching therewith can be generated. For example, an area and a position for displaying an in-vehicle page can be determined based on the status of the display screen the vehicle. Alternatively, a page structure of the in-vehicle page can be determined based on the size of the display screen of the vehicle. For instance, for a display screen with a small size, the page structure may be simple, without unnecessary elements, to ensure that information can be read clearly; for a display screen with a large size, more details and interactive elements can be displayed.

In other embodiments, a preset layout manner can be generated based on the traveling status of the vehicle. For example, when the vehicle is traveling at a high speed, the page may have a simple overall structure, with a large font displayed thereon, to enable a driver to quickly obtain information in a short period of time. It would be appreciated that different users have different preferences for page styles. On this basis, by the settings interface of the in-vehicle system, speech instruction, or the like, a user can express his/her preferences for the page layout, color scheme, font style, and the like. Based on the input information from the user, a preset layout manner in line with the user's personalized need can be generated. In addition, the generative model can dynamically adjust page elements (e.g., adding some specific elements, or the like) and the layout according to a change of the exterior environment (e.g., weather, a road condition, or the like).

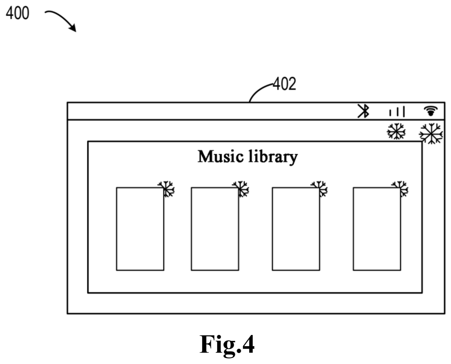

Fig. 4 is a schematic diagram of generating an in-vehicle page based on a preset layout manner according to some embodiments of the present disclosure. As shown therein, the preset layout manner may be "the font size on the page is 12 pt; the font is KaiTi; icons are rectangular; winter elements are embodied in the page," and a corresponding in-vehicle page 402 can be generated based on the preset layout manner. A snowflake element is added to the in-vehicle page 402, the font is 12-pt KaiTi, and icons are rectangular.

In actual use, the information input by the user may be obscure or vague. In order to accurately understand and clarify the user's intent, the language model in the generative model can generate a corresponding text content corresponding to a speech content input by the user. The language model can analyze the vocabulary, phrases, and sentence structure in the text content, and determine a plurality of semantic contents corresponding to the text content by performing semantic recognition and semantic decomposition on the text content. It would be appreciated that the language model can interpret and expand a word or phrase in the text content. For example, a synonym can be used to explain a content of a word. By way of example, a plurality of corresponding semantic contents corresponding to the text content of "Remind me to pick up my child at 4 p.m." may include "4 p.m.," "pick up my child," and "remind." Those semantic contents can accurately represent the user's intent of performing a specific action (remind) at a specific time (4 p.m.) to complete a specific task (pick up my child). In this way, the input information of the user is divided into a plurality of semantic contents which can facilitate extraction of key information from the input information, generating a better understanding of the user's intent and need.

In practice, various types of restriction conditions are applied to the vehicle during traveling or in other scenarios. For example, if the vehicle travels at a high speed, the driver is not allowed to answer the phone, watch a video, or the like; or there is a certain imitation range of an adjustment angle of a seat during vehicle traveling. On the basis, in order to ensure the travel safety of the vehicle and the safety of users, the impact of the safety restriction information can be taken into consideration in the process of generating an in-vehicle page. In some embodiments of the present disclosure, the safety restriction information may include vehicle operation restrictions and driving rules set to ensure the travel safety of the vehicle and the driving or riding safety of users. By way of example, the safety restriction information can be used to characterize information on operations permitted or prohibited by the vehicle, which may include, for example, a plurality of predefined page layout limitations (e.g., layout restrictions that conform to ergonomic principles and can ensure driving safety), traffic laws and regulations (e.g., speed limits, road traffic rules, traffic signs, and the like), control permissions (e.g., prohibited operations for the driver and passengers in certain conditions), and the like. For instance, during emergency braking, all non-essential functions are temporally disabled; or during the acceleration or deceleration, there is a brief display of elements on the displayed application or page.

In some embodiments of the present disclosure, in order to ensure the safe operation of the vehicle, the safety restriction information may include a vehicle control permission whitelist, where applications and instructions in the whitelist are authorized applications and instructions. Only the instructions in the whitelist can control the vehicle, which can effectively prevent malicious attacks and misoperations.

In some embodiments of the present disclosure, in the process of generating the in-vehicle page, the generative model can adjust the generated page based on the safety restriction conditions, to obtain a final in-vehicle page. For example, a layout, an arrangement, elements, a style, and the like, of the page can be adjusted based on the safety restriction conditions. In other embodiments, in the process of startup or usage of the in-vehicle page, based on the safety restriction conditions, the called function of the in-vehicle component can be adjusted, or it can be determined whether a page can be enabled or a page in use is to be closed. For instance, if the vehicle is traveling at a high speed, the adjustment angle of the seat should not be greater than a preset angle threshold, to prevent an excessive inclination of the seat from impacting the stability and safety of the driver and passengers during emergency braking or in other unexpected situations. In addition, if the vehicle is traveling at a high speed, the video watching and phone call functions are prohibited. Therefore, if the in-vehicle page is a video playback page or phone call page, it is prohibited to enable such in-vehicle page, or close the enabled in-vehicle page.

In some embodiments of the present disclosure, the generative model can be linked to various ecological contents. For example, the generative model can integrate a plurality of preset encapsulated resources. The preset encapsulated resources may include, but are not limited to, APIs (the generative model can interact with various services by calling APIs), resources of a content provider, and a third-party service. Wherein, the content provider can provide a wealth of cloud resources such as movies, music, navigation, news, and the like. The resources provided by the content provider may also include a plurality of APIs, and different APIs are used to provide different types of functions, which may be, for example, an API with a function of enabling weather or positioning queries, or the like. On the basis, according to the user's intent, the generative model can determine a resource matching the user's intent from a plurality of encapsulated resources. For instance, if a user wants to watch an interstellar-themed movie, a media player resource provided by the content provider can be called. Based on the resource, a candidate in-vehicle page can be generated. In order to make the final generated in-vehicle page more in line with the user need while ensuring the user safety, based on the status of the vehicle and the safety restriction conditions, the candidate in-vehicle page can be adjusted, for example, the layout of the candidate in-vehicle page, or a control instruction of an in-vehicle component coupled with the in-vehicle page. By way of example, if the vehicle is traveling at a high speed, in order to avoid distracting the driver, the content displayed on the in-vehicle page can be simplified, and unnecessary animations and flashing effects can be reduced while the font and icon sizes are increased, which can ensure that the driver can obtain quickly and accurately the required information.

In this way, the in-vehicle page can be comprehensively and dynamically adjusted based on multiple factors such as the status of the vehicle, the safety restriction conditions, and the like, to obtain an optimized in-vehicle page. Therefore, the user can be provided with a more personalized in-vehicle page more in line with the user's preference.

It is worth noting that the generative model can generate an application, or can generate an application in the form of web (an in-vehicle page). Wherein, the application in the form of web may be a web page that can be accessed through a browser, and has a similar functionality to that of application software. The generated application can be distributed to the in-vehicle infotainment system or other terminal devices in multiple ways. For example, an application installation package can be transmitted via a wireless network to the in-vehicle infotainment system for installation; or an application can be directly copied to the in-vehicle infotainment system in a cabled manner, for instance, a USB, or the like. The in-vehicle infotainment system can access the generated in-vehicle page in the cloud by entering the website address in a browser or in other manners. The generative model can generate different application software forms according to the application scenario and the user need.

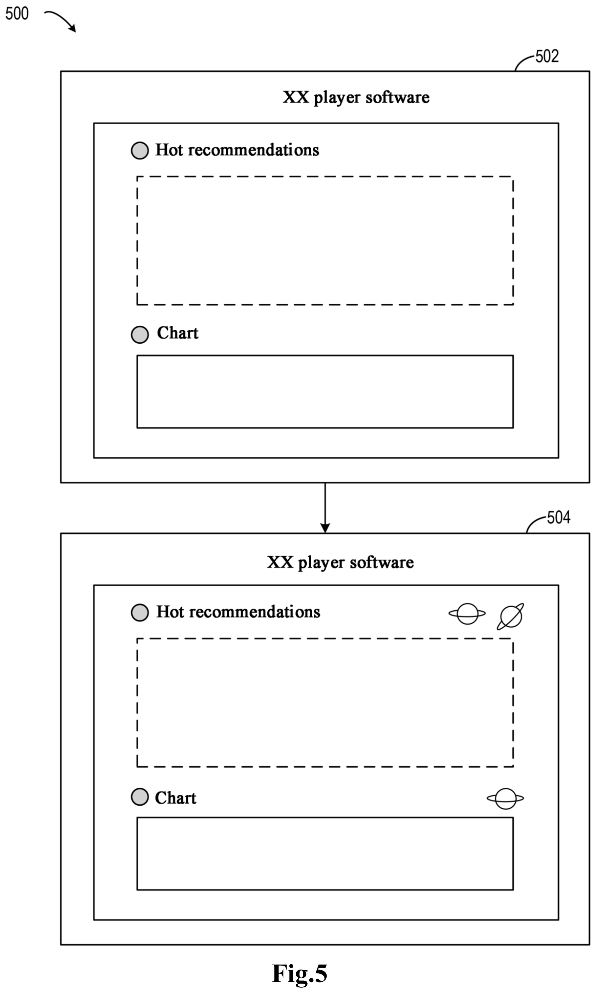

Fig. 5 illustrates a schematic diagram of adjusting an in-vehicle page according to some embodiments of the present disclosure. As shown therein, the generative model can generate a corresponding candidate in-vehicle page 502 based on a status of the vehicle and input information from a user. It would be appreciated that, in order to make the final generated in-vehicle page in line with the user's preference, a user's acceptance for the candidate in-vehicle page 502 and a content desired to be adjusted can be determined by actively asking the user. The user can select, according to his/her need, whether the candidate in-vehicle page 502 needs to be adjusted. For example, if the user's adjustment suggestion may be "Add some interstellar-themed elements to the page," a "planet" element can be added to the candidate in-vehicle page 502, to obtain an in-vehicle page 504. In this way, the user can be provided with a function of editing the in-vehicle page, making the adjusted in-vehicle page more in line with the user's need and preference.

In some embodiments of the present disclosure, in order to improve the page generation efficiency, different page layouts can be preset according to the common driving scenario and the user need. By way of example, based on a speed range of the vehicle, a driving period, and weather, a plurality of page layouts can be preset, for instance, a preset page layout 1 (e.g., applicable to a daily driving scenario), a preset page layout 2 (e.g., applicable to a long-distance driving scenario), a preset page layout 3 (e.g., applicable to a special weather scenario), and a preset page layout 4 (e.g., applicable to a high-speed traveling scenario). Different page layouts have different page styles or page arrangements. On the basis, upon receiving input information from the user and the status of the vehicle, the generative model can select a corresponding page layout from a plurality of preset page layouts based on the user's intent and the status of the vehicle. By way of example, a corresponding page layout can be selected from the plurality of preset page layouts based on the current speed of the vehicle. For instance, if the speed of the vehicle is greater than a preset speed threshold, it can be determined that the page layout is the preset page layout 4. In other embodiments, a corresponding preset page layout can be determined based on matching levels of a feature corresponding to the status of the vehicle respectively with the plurality of preset pages. In this process, a more accurate and more suitable page layout can be determined in conjunction with the user's historical behavior and preference, and a current context.

In other embodiments, for other scenes not covered by the preset page layouts, the generative model, considering the learned layouts of various applications, can generate reasonable layouts based on the user's intent or the status of the vehicle. In other words, in the embodiments of the present disclosure, the page layout corresponding to the generated page may be a predefined page layout, or may be generated in real time. The method of generating the page layout is not limited herein.

In some embodiments of the present disclosure, previous input information from the user and dialogue information of the generative model can be used to represent the user's habit or preference to some extent. On the basis, in conjunction with the user's historical input information or dialogue history database, a corresponding in-vehicle page can be generated, where the historical input information may be a content that the user indicated to adjust last time, or a generation intent that the user indicated last time. In some embodiments of the present disclosure, the dialogue history database may be stored in the vehicle, or may be stored in the cloud server in communication with the vehicle. For example, if the adjusted content for the historical in-vehicle page is "Make the style of the in-vehicle page more lively," it can be determined that the user prefers a lively page layout. Therefore, in the process of generating the in-vehicle page, more special effects or animation effects can be added while vibrant, high-contrast color schemes can be used, to make the final in-vehicle page colorful and vividly and thus better cater to the user's preference.

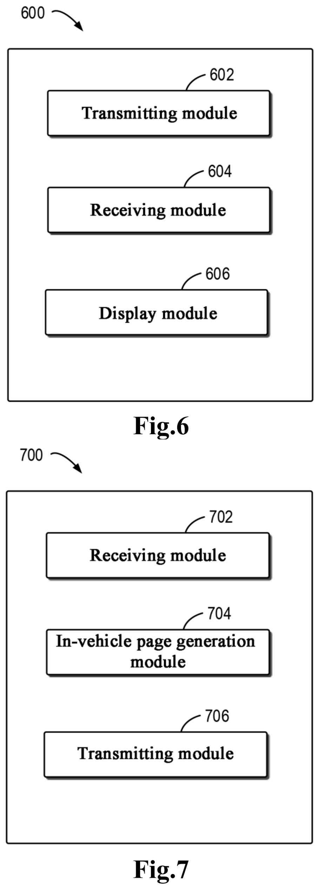

Fig. 6 illustrates a block diagram of an apparatus 600 for displaying an in-vehicle page according to some embodiments of the present disclosure. As shown therein, the apparatus 600 includes a transmitting module configured to transmit input information from a user and a status of a vehicle to a cloud server. The apparatus 600 further includes a receiving module configured to receive an in-vehicle page from the cloud server, where the in-vehicle page is generated by a generative model in the cloud server based on the input information and the status of the vehicle. In addition, the apparatus 600 includes a display module configured to display the in-vehicle page based on the received in-vehicle page.

It would be appreciated that the apparatus 600 according to the present disclosure can be used to attain at least one of the advantages that can be obtained by the method or process described above.

In some embodiments, the apparatus 600 is further configured to: in a process of running the in-vehicle page, determine whether running of the in-vehicle page conforms to safety restriction information of the vehicle; and in response to the running of the in-vehicle page not conforming to the safety restriction information, stop running the in-vehicle page and return abnormality alert information.

In some embodiments, the apparatus 600 is further configured to: determine, based on the status of the vehicle, a vehicle component coupled with the in-vehicle page; transmit configuration information of the vehicle component to the cloud server; receive a control instruction for the vehicle component transmitted by the cloud server, the control instruction generated by calling, by the generative model, a corresponding vehicle component interface; and in response to a start request or a use request for the in-vehicle page, control the corresponding vehicle component based on the control instruction.

In some embodiments, the in-vehicle page is generated by the generative model based on a user intent corresponding to the input information, safety restriction information, and the status of the vehicle.

Fig. 7 illustrates a block diagram of an apparatus 700 for generating an in-vehicle page according to some embodiments of the present disclosure. As shown therein, the apparatus 700 includes a receiving module 702 configured to receive input information from a user and a status of a vehicle. The apparatus 700 further includes an in-vehicle page generation module configured to generate, by a generative model, a corresponding in-vehicle page based on the input information and the status of the vehicle. Moreover, the apparatus 700 includes a transmitting module 706 configured to transmit the in-vehicle page to the vehicle.

In some embodiments, the in-vehicle page generation module 704 is further configured to: determine an intent of the user based on the input information; and generate, by the generative model, the corresponding in-vehicle page based on the intent and the status of the vehicle.

In some embodiments, determining the intent of the user comprises: determining a corresponding text content based on the input information from the user; obtaining a plurality of semantic contents by decomposing the text content; and determining the intent of the user based on the plurality of semantic contents.

In some embodiments, the in-vehicle page generation module 704 is further configured to: obtain safety restriction information of the vehicle; and generate, by the generative model, the corresponding in-vehicle page based on the intent of the user, the safety restriction information and the status of the vehicle.

In some embodiments, the in-vehicle page generation module 704 is further configured to: obtain, based on the intent of the user, an encapsulated resource matching the intent of the user from preset encapsulated resources; generate a candidate in-vehicle page based on the encapsulated resource; and generate, based on the status of the vehicle and the safety restriction information, the corresponding in-vehicle page by adjusting the candidate in-vehicle page.

In some embodiments, generating the corresponding in-vehicle page by adjusting the candidate in-vehicle page comprises: determining a layout of the candidate in-vehicle page based on the status of the vehicle; determining usage restriction conditions corresponding to the in-vehicle page based on the safety restriction information; and generating, based on the layout and the usage restriction conditions, the corresponding in-vehicle page by adjusting the candidate in-vehicle page.

In some embodiments, the apparatus 700 is further configured to: obtain an adjustment intent for the in-vehicle page from the user; and adjust, by the generative model, the in-vehicle page based on the adjustment intent.

In some embodiments, the in-vehicle page generation module 704 is further configured to: determine a corresponding layout from preset page layouts based on the intent of the user and the status of the vehicle; and generate, by the generative model, the corresponding in-vehicle page based on the page layout.

In some embodiments, the apparatus 700 is further configured to: receive configuration information of a vehicle component transmitted by the vehicle; and generate, based on the configuration information, a control instruction to control the vehicle component by calling a corresponding vehicle component interface; and transmit the control instruction to the vehicle.

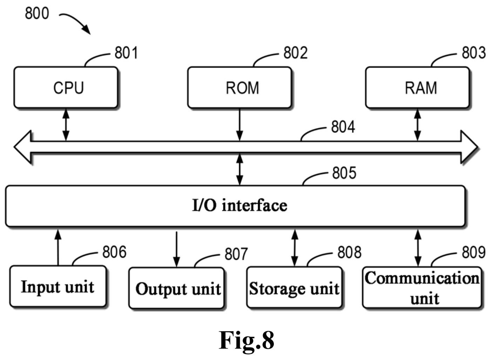

Fig. 8 illustrates a block diagram of an example device 800 that can be used to implement embodiments of the present disclosure. As shown, the device 800 includes a computing unit 801 which performs various appropriate actions and processing, based on computer program instructions stored in a Read-Only Memory (ROM) 802 or computer program instructions loaded from a storage unit 808 to a Random Access Memory (RAM) 803. The RAM 803 stores therein various programs and data required for operations of the device 800. The computing unit 801, the ROM 802 and the RAM 803 are connected via a bus 804 with one another. An input/output (I/O) interface 805 is also connected to the bus 804.

The following components in the device 800 are connected to the I/O interface 805: an input unit 806 such as a keyboard, a mouse and the like; an output unit 807 including various kinds of displays and a loudspeaker, etc.; a storage unit 808 including a magnetic disk, an optical disk, and etc.; a communication unit 809 including a network card, a modem, and a wireless communication transceiver, etc. The communication unit 809 allows the device 800 to exchange information/data with other devices through a computer network such as the Internet and/or various kinds of telecommunications networks.

The computing unit 801 may be various types of general purpose and/or dedicated processing components having a processing and computing capability. Some examples of the computing unit 801 include, but are not limited to, a Central Processing Unit (CPU), a Graphics Processing Unit (GPU), various types of dedicated Artificial Intelligence (AI) computing chips, various types of computing units having machine learning model algorithms run thereon, a Digital Signal Processor (DSP), any appropriate processor, controller, microcontroller, or the like. The computing unit 801 can execute various methods and processing described above, for example, the method 300. For example, in some embodiments, the method 300 may be implemented as computer software programs that are tangibly included in a machine readable medium, e.g., the storage unit 808. In some embodiments, part or all of the computer programs may be loaded and/or mounted onto the device 800 via ROM 802 and/or communication unit 809. When the computer program is loaded to the RAM 803 and executed by the computing unit 801, one or more steps of the method 300 as described above can be executed. Alternatively, in other embodiments, the computing unit 801 may be configured in any other appropriate manners (for example, by means of firmware) to perform the method 300.

The functions described herein can be performed, at least in part, by one or more hardware logic components. For example, and without limitation, illustrative types of hardware logic components that can be used include Field-Programmable Gate Arrays (FPGAs), Application-specific Integrated Circuits (ASICs), Application-specific Standard Products (ASSPs), System-on-a-chip systems (SOCs), Complex Programmable Logic Devices (CPLDs), and the like.

Program code for carrying out methods of the present disclosure described herein may be written in any combination of one or more programming languages. These program codes may be provided to a processor or controller of a general-purpose computer, dedicated computer, or other programmable data processing apparatus, such that the program codes, when executed by the processor or controller, cause the functions/operations specified in the flowcharts and/or block diagrams to be implemented. The program code may execute entirely on a machine, partly on the machine, as a stand-alone software package, partly on the machine and partly on a remote machine or entirely on the remote machine or server.

In the context of this disclosure, a machine readable medium may be any tangible medium that may contain, or store a program for use by or in combination with an instruction execution system, apparatus, or device. The machine readable medium may be a machine readable signal medium or a machine readable storage medium. A machine readable medium may include, but is not limited to, an electronic, magnetic, optical, electromagnetic, infrared, or semiconductor system, apparatus, or device, or any suitable combination of the foregoing. More specific examples of the machine readable storage medium would include an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. Further, while operations are depicted in a particular order, this should not be understood as requiring that such operations be performed in the particular order shown or in sequential order, or that all illustrated operations be performed, to achieve desirable results. In certain circumstances, multitasking and parallel processing may be advantageous. Likewise, while several specific implementation details are contained in the above discussions, these should not be construed as limitations on the scope of the subject matter described herein. Certain features that are described in the context of separate implementations may also be implemented in combination in a single implementation. Conversely, various features that are described in the context of a single implementation may also be implemented in multiple implementations separately or in any suitable sub-combination.

Although the subject matter has been described in language specific to structural features and/or methodological actions, it is to be understood that the subject matter specified in the appended claims is not necessarily limited to the specific features or actions described above. Rather, the specific features and actions described above are disclosed as example forms of implementing the claims.

## Claims

1. A method (300A) for displaying an in-vehicle page, comprising:
transmitting (302A) input information from a user and a status of a vehicle to a cloud server;
receiving (304A) an in-vehicle page from the cloud server, the in-vehicle page being generated by a generative model in the cloud server based on the input information and the status of the vehicle; and
displaying (306A) the in-vehicle page based on the received in-vehicle page.

2. The method of claim 1, further comprising:
determining, in a process of running the in-vehicle page, whether running of the in-vehicle page conforms to safety restriction information about the vehicle; and
stopping, in response to the running of the in-vehicle page not conforming to the safety restriction information, running the in-vehicle page and returning abnormality alert information.

3. The method of claim 1 or 2, further comprising:
determining, based on the status of the vehicle, a vehicle component coupled with the in-vehicle page;
transmitting configuration information about the vehicle component to the cloud server;
receiving a control instruction for the vehicle component transmitted by the cloud server, the control instruction generated by calling, by the generative model, a corresponding vehicle component interface; and
controlling, in response to a start request or a use request for the in-vehicle page, the corresponding vehicle component based on the control instruction.

4. The method of any one of claims 1 to 3, wherein the in-vehicle page is generated by the generative model based on a user intent corresponding to the input information, safety restriction information, and the status of the vehicle.

5. A method (300B) of generating an in-vehicle page, comprising:
receiving (302B) input information from a user and a status of a vehicle;
generating (304B), by a generative model, a corresponding in-vehicle page based on the input information and the status of the vehicle; and
transmitting (306B) the in-vehicle page to the vehicle.

6. The method of claim 5, further comprising:
determining an intent of the user based on the input information; and
generating, by the generative model, the corresponding in-vehicle page based on the intent and the status of the vehicle.

7. The method of claim 6, wherein determining the intent of the user comprises:
determining a corresponding text content based on the input information from the user;
obtaining a plurality of semantic content items by decomposing the text content; and
determining the intent of the user based on the plurality of semantic content items.

8. The method of claim 6 or 7, wherein generating (304B), by the generative model, the corresponding in-vehicle page comprises:
obtaining safety restriction information of the vehicle; and
generating, by the generative model, the corresponding in-vehicle page based on the intent of the user, the safety restriction information and the status of the vehicle.

9. The method of claim 7, wherein generating (304B), by the generative model, the corresponding in-vehicle page comprises:
obtaining, based on the intent of the user, an encapsulated resource matching the intent of the user from preset encapsulated resources;
generating a candidate in-vehicle page based on the encapsulated resource; and
generating, based on the status of the vehicle and safety restriction information, the corresponding in-vehicle page by adjusting the candidate in-vehicle page.

10. The method of claim 9, wherein generating (304B) the corresponding in-vehicle page by adjusting the candidate in-vehicle page comprises:
determining a layout of the candidate in-vehicle page based on the status of the vehicle;
determining usage restriction conditions corresponding to the in-vehicle page based on the safety restriction information; and
generating, based on the layout and the usage restriction conditions, the corresponding in-vehicle page by adjusting the candidate in-vehicle page.

11. The method of any one of claims 5 to 10, further comprising:
obtaining, from the user, an adjustment intent for the in-vehicle page; and
adjusting, by the generative model, the in-vehicle page based on the adjustment intent;
wherein the method in particular further comprises:
receiving configuration information of a vehicle component transmitting by the vehicle;
generating, based on the configuration information, a control instruction to control the vehicle component by calling a corresponding vehicle component interface; and
transmitting the control instruction to the vehicle.

12. The method of any one of claims 5 to 11, wherein generating (304B), by the generative model, the corresponding in-vehicle page further comprises:
determining a corresponding page layout from preset page layouts based on an intent of the user and the status of the vehicle; and
generating, by the generative model, the corresponding in-vehicle page based on the page layout.

13. An apparatus (600) for generating an in-vehicle page, comprising:
a transmitting module (602) configured to transmit input information from a user and a status of a vehicle to a cloud server;
a receiving module (604) configured to receive an in-vehicle page from the cloud server, the in-vehicle page being generated by a generative model in the cloud server based on the input information and the status of the vehicle; and
a display module (606) configured to display the in-vehicle page based on the received in-vehicle page.

14. An electronic device, comprising:
at least one processor; and
a memory coupled to the at least one processor and having instructions stored thereon, wherein the instructions, when executed by the at least one processor, cause the electronic device to perform the method of any of claims 1-12.

15. A computer program product tangibly stored on a computer readable medium and comprising machine executable instructions that, when executed, implement the method of any of claims 1-12.
